# EUROPÄISCHE PATENTANMELDUNG

(11) **EP 2 730 362 A1**
(43) Veröffentlichungstag der Anmeldung: **14.05.2014**
(21) Anmeldenummer: 12192387.4
(22) Anmeldetag: 13.11.2012
(51) Int. Cl.: B23K 15/00, B23K 26/00, B23K 26/03, B23K 26/32, B23K 26/34, B23K 26/36

(54) **Plasmagesteuerter Strahlprozess und entsprechende Vorrichtung unter Verwendung eines Plasmadetektors**

(71) Anmelder: Siemens Aktiengesellschaft, 80333 München (DE)
(72) Erfinder: Burbaum, Bernd, 14612 Falkensee (DE); Ott, Michael, 45470 Mülheim an der Ruhr (DE)

(57) **Zusammenfassung**

Durch die Verwendung eines Plasmadetektors (13) bei Schweißprozessen ist eine wesentlich flexiblere Prozessregelung möglich.

## Beschreibung

Die Erfindung betrifft einen Strahlprozess sowie eine Vorrichtung, bei dem ein Plasma bzw. die Plasmaentwicklung überwacht wird und zur Steuerung verwendet wird.

Bauteile werden oft umgeschmolzen oder es findet eine Auftragsschweißung statt, wobei insbesondere bei der gerichtet erstarrenden Auftragsschweißung eine Prozesskontrolle notwendig ist. In der Regel wird dazu eine Temperaturmessung durchgeführt, die zur Regelung verwendet wird.

Dies ist jedoch sehr aufwendig und muss über den gesamten Brennfleck erfolgen und teilweise bewertet werden.

Es ist daher Aufgabe der vorliegenden Erfindung, o. g. Vorgehensweise zu vereinfachen.

Die Aufgabe wird gelöst durch ein Verfahren gemäß Anspruch 1 und eine Vorrichtung gemäß Anspruch 7.

In den Unteransprüchen sind weitere vorteilhafte Maßnahmen aufgelistet, die beliebig miteinander kombiniert werden können, um weitere Vorteile zu erzielen.

Es zeigen:
- Figur 1: eine erfindungsgemäße Vorrichtung,
- Figur 2: eine Liste von Superlegierungen,

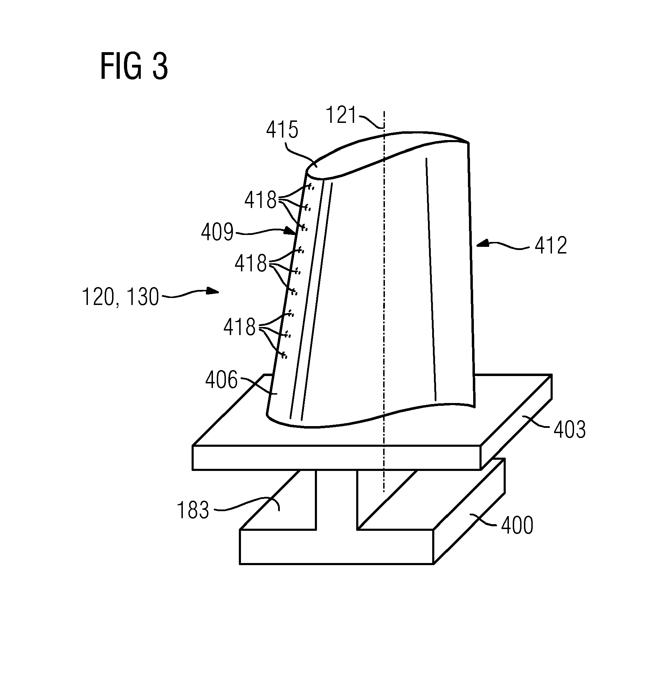

- Figur 3: eine Turbinenschaufel.

Die Beschreibung und die Figuren stellen nur Ausführungsbeispiele der Erfindung dar.

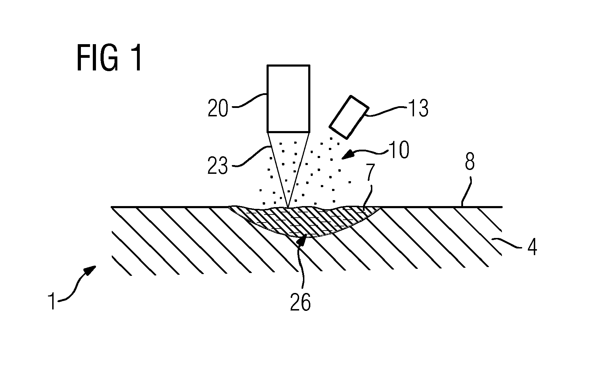

In Figur 1 ist eine erfindungsgemäße Vorrichtung 1 gezeigt. Die Vorrichtung 1 weist eine nicht näher dargestellte Halterung oder Auflage für ein zu bearbeitendes Substrat 4 eines Bauteils 120, 130 auf.

Dabei soll an einer Stelle 7 der Oberfläche 8 des Substrats 4 eine Strahlbearbeitung, vorzugsweise ein Schweißprozess stattfinden.

Dies kann ein Umschmelzprozess eines Risses (nicht dargestellt) oder eine Auftragsschweißung sein.

Die Vorrichtung 1 kann vorzugsweise eine Laserschweißvorrichtung oder sonstige Schweißvorrichtungen beinhalten.

Mittels eines Energiestrahls 23 einer Strahlquelle 20, vorzugsweise ein Laserstrahl, wird ein Schmelzbad 26 im Bereich der Oberfläche des Substrats 4 erzeugt. Die Strahlquelle 20, hier vorzugsweise ein Laser, ist verbunden mit einer Steuerung und/oder Regelung 15, die wiederum mit einem Plasmadetektor 13 verbunden ist.

Geeignete Plasmadetektoren sind bekannt, z.B. auf Germanium-Basis.

Sobald sich ein Plasma 10 entwickelt, wird durch eine Veränderung der Leistung der Strahlquelle 20, insbesondere eine Reduzierung des Energieeintrags in das Schmelzbad 26 erzielt und somit die unerwünschte Ausbildung des Plasmas 10 unterbunden.

In Fällen, wo ein Plasma erwünscht ist, z.B. bei Materialabtrag mittels Strahlprozess, kann die Plasmaentwicklung gezielt gesteuert und in ihrer Stärke gesteuert und/oder geregelt werden, d.h. wird kein Plasma mehr detektiert, wird der Prozess so gesteuert, dass der Energieeintrag wieder höher wird, insbesondere durch eine Leistungserhöhung.

Das Substrat 4 kann vorzugsweise beim Materialabtrag auch ein Schichtsystem darstellen, d.h. es wird vorzugsweise Material einer keramischen und/oder metallischen Schicht eines Substrats 4 abgetragen.

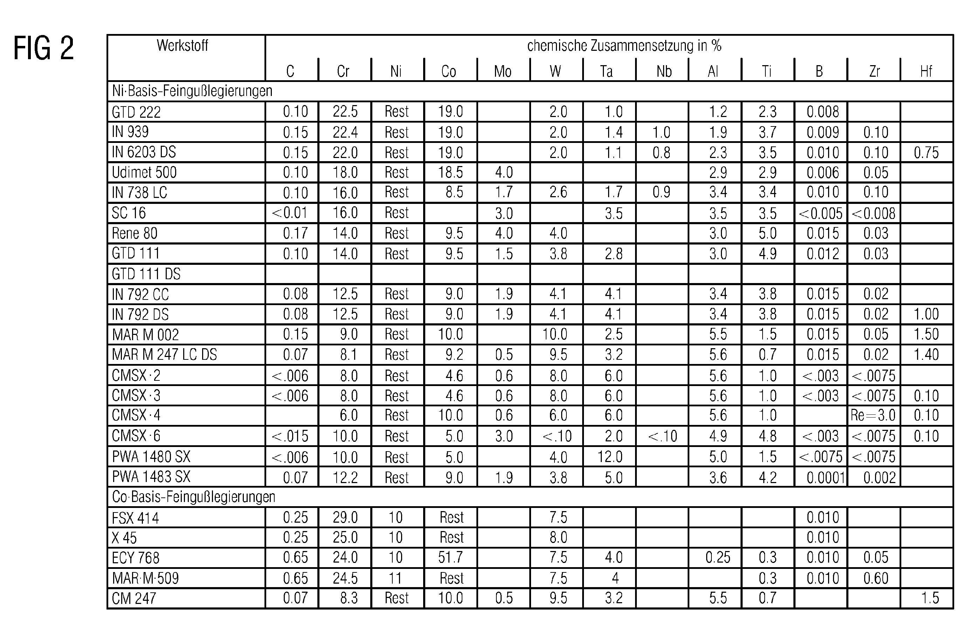

Das Substrat 4 ist vorzugsweise metallisch und weist vorzugsweise eine nickel- oder kobaltbasierte Legierung, insbesondere gemäß Figur 2 auf.

Diese Regelung mittels Plasmadetektor 13 ist wesentlich flexibler und erlaubt es wegen der geringen Größe sich gut in vorhandene Prozessverfahrenssysteme zu integrieren. Insbesondere ist die Bewertung hier einfacher, denn sobald sich ein Plasma 10 entwickelt oder sich reduziert, tritt die Regelung ein.

## Patentansprüche

1. Verfahren zur Strahlbearbeitung eines Substrats (4), bei dem ein Energiestrahl (23) einer Strahlquelle (20) zumindest ein Schmelzbad (26) auf und in einem Substrat (4) erzeugt und
wobei ein Plasmadetektor (13) zur Regelung für die Steuerung der Strahlquelle (20) verwendet wird.

2. Verfahren nach Anspruch 1,
bei dem der Energiestrahl ein Laserstrahl ist.

3. Verfahren nach einem oder beiden der Ansprüche 1 oder 2, bei dem ein Auftragsschweißen auf dem Substrat (4) stattfindet.

4. Verfahren nach einem oder beiden der Ansprüche 1 oder 2, bei dem ein Umschmelzen des Substrats (4) stattfindet.

5. Verfahren nach einem oder mehreren der Ansprüche 1 bis 4,
bei dem, wenn ein Plasma (10) detektiert wird,
der Energieeintrag des Energiestrahls (23) in das Substrat (4) geregelt wird,
insbesondere reduziert wird.

6. Verfahren nach einem oder beiden der Ansprüche 1 oder 2, bei dem ein Abtragungsprozess vom unbeschichteten oder beschichteten Substrat (4) stattfindet und
die Energie erhöht wird,
wenn kein Plasma (10) mehr detektiert wird.

7. Vorrichtung (1) zur Strahlbearbeitung,
die aufweist
eine Halterung oder Auflage für ein zu bearbeitendes Bauteil (4),
eine Strahlquelle (20), die Energiestrahlen (23) erzeugen kann,
die über eine Regelung (15) gesteuert werden kann, **dadurch gekennzeichnet, dass**
ein Plasmadetektor (13) vorhanden ist,
der zur Regelung für die Steuerung der Strahlquelle (20) verwendet werden kann.
